# EUROPÄISCHE PATENTSCHRIFT

(11) **EP 2 899 172 B1**
(45) Veröffentlichungstag und Bekanntmachung des Hinweises auf die Patenterteilung: **31.10.2018**
(21) Anmeldenummer: 14196285.2
(22) Anmeldetag: 04.12.2014
(51) Int. Cl.: C04B 26/26, C04B 111/00, C04B 111/72

(54) **Thermoplastische Füllmasse, insbesondere zur Verwendung im Straßenbau**
Thermoplastic filling compound, in particular for use in road construction
Masse de remplissage thermoplastique, en particulier destinée à être utilisée dans la construction de routes

(30) Priorität: 04.12.2013 DE 102013224894
(43) Veröffentlichungstag der Anmeldung: 29.07.2015
(73) Patentinhaber: Carl Ungewitter Trinidad Lake Asphalt GmbH & Co. KG, 28195 Bremen (DE)
(72) Erfinder: Müller, Marco, 14612 Falkensee (DE); Knöbig, Andreas, 28335 Bremen (DE)
(74) Vertreter: Eisenführ Speiser

(56) Entgegenhaltungen:
- WO-A1-99/42662
- DE-A1- 10 007 298
- DE-A1- 10 010 451
- DE-A1- 19 602 925
- US-A- 2 978 351

## Beschreibung

Die vorliegende Erfindung betrifft eine thermoplastische Füllmasse, bestehend aus einer Vielzahl an Partikeln mit einem durchschnittlichen Durchmesser im Bereich von > 2 mm bis 12 mm, vorzugsweise im Bereich von > 2 mm bis 10 mm, wobei die thermoplastische Füllmasse hergestellt oder herstellbar ist durch ein erfindungsgemäßes Verfahren wie hierin beschrieben. Die vorliegende Erfindung betrifft dementsprechend auch ein Verfahren zur Herstellung einer thermoplastischen Füllmasse. Die vorliegende Erfindung betrifft außerdem eine Vormischung zur Herstellung einer thermoplastischen Füllmasse, herstellbar oder hergestellt durch ein ebenfalls hierin beschriebenes Verfahren. Die vorliegende Erfindung betrifft darüber hinaus die Verwendung der erfindungsgemäßen thermoplastischen Füllmasse zur Beseitigung von Oberflächenschäden in Beton-, Pflaster- oder Asphaltflächen oder zum Schließen von Bohrlöchern oder Fahrbahnaufbrüchen oder zum Einbringen in oder Schließen von Fugen von Hochbauten. Dementsprechend betrifft die vorliegende Erfindung auch ein Verfahren zum Beseitigen von Oberflächenschäden in Beton-, Pflaster- oder Asphaltflächen oder zum Schließen von Bohrlöchern oder zum Schließen von Fahrbahnaufbrüchen oder zum Schließen von Fugen von Hochbauten.

Geeignete Bauverfahren für die Erhaltung von Asphaltstraßen mit großer Ausdehnung und/oder Tiefe sind in der Regel in den einschlägigen Vorschriften und Merkblättern beschrieben, beispielsweise in "Zusätzliche Technischen Vertragsbedingungen (ZTV) Asphalt" sowie in "Zusätzliche Technische Vertragsbedingungen und Richtlinien für die bauliche Erhaltung von Verkehrsflächenbefestigungen - Asphaltbauweisen" ZTV BEA-StB 09/13. Die in den vorgenannten Regelwerken beschriebenen baulichen Maßnahmen erfordern überwiegend den Einsatz von Großgerät mit entsprechend hohem Personalbedarf. Wirtschaftlich einsetzbar sind die bekannten baulichen Maßnahmen lediglich bei größeren Flächen und hohem Mengenbedarf. Die hergebrachten Methoden können insbesondere kleinvolumige Schadenserscheinungen ungleichmäßiger Art, wie z. B. unterschiedlich tiefe und breite Löcher, Aushöhlungen, Schürfe, Spalten klaffende Risse, flache Abtragungen und ähnliches wirtschaftlich und/oder dauerhaft nicht beseitigen.

US 2 978 351 beschreibt eine thermoplastische Füllmasse mit einer Gesteinskörnung von >0,063mm bis <=2mm von 15-70M%; 20-35M% Körner mit Korngrösse >2mm und einem Verhältnis von Bindemittel zur Gesamtmenge von 4-8%.

DE 100 10 451 A1 beschreibt ein Verfahren zur Herstellung einer thermoplastischen Füllmasse zur Beseitigung von Oberflächenschäden in Beton- oder Asphaltflächen bzw. zum Einbringen in Fugen von Hochbauten, bei dem zunächst Splitt, Sand, ein mehlfeiner Stoff und ein bituminöses Bindemittel bei einer Temperatur von etwa 180 °C bis 240 °C homogen gemischt werden. Danach wird dem in ständiger Bewegung befindlichen Mischgut ein Kühlmittel schockartig zugesetzt. Die vor der Kühlmittelzugabe hoch klebefähige Masse zähflüssiger Konsistenz wird durch diese schockartige Zusetzung eines Kühlmittels in ein körnig-rolliges Kleingranulat ohne Zusammensetzung überführt, und zwar durch eine sehr hohe Oberflächenspannung der verschiedenen Bestandteile des Mischguts. Dieses Kleingranulat kann durch Aufheizung in eine gießfähige bzw. streichbare Spachtelmasse mit hoher Klebekraft verwandelt werden.

Nachteilig an dem in DE 100 10 451 A1 beschriebenen Verfahren ist, dass die Herstellung des Granulats den Einsatz eines Kühlmittels erforderlich macht, und dass das erhaltene Granulat eine undefinierte Körnung aufweist. Darüber hinaus muss das Granulat zur Herstellung der Füllmasse vor Ort in einem Aufwärmkessel aufgeheizt werden, um es in eine gießfähige bzw. streichbare Spachtelmasse umzuwandeln.

Der Erfindung liegt demgemäß ausgehend vom Stand der Technik die Aufgabe zugrunde, eine verbesserte thermoplastischen Füllmasse sowie ein geeignetes Verfahren zur Herstellung einer thermoplastischen Füllmasse aus einer Asphalt-(Vor-)Mischung bereitzustellen, mit welcher, insbesondere kurzfristig, auch kleinvolumige Schadenserscheinungen wirtschaftlich und dauerhaft beseitigt werden können.

Die Aufgabe wird primär gelöst durch eine thermoplastische Füllmasse, bestehend aus einer Vielzahl an Partikeln mit einem durchschnittlichen (vorzugsweise mittleren) Durchmesser im Bereich von > 2 mm bis 12 mm, vorzugsweise im Bereich von > 2 mm bis 10 mm, wobei die thermoplastische Füllmasse hergestellt oder herstellbar ist durch ein Verfahren bestehend aus oder umfassend folgende Schritte:
a) Bereitstellen von
   (A) einem Mineralstoffgemisch bestehend aus oder enthaltend, jeweils bezogen auf das Gesamtgewicht des Mineralstoffgemischs,
      (i) (optional) 0 bis 15 M.-% Füllstoff aus mineralischen Bestandteilen mit einer Korngröße von ≤ 0,063 mm,
      (ii) 57 bis 100 M.-% einer Gesteinskörnung aus Gesteinskörnern mit einer Korngröße im Bereich von > 0,063 mm bis ≤ 2 mm,
         und
      (iii) (optional) 0 bis 28 M.-% einer Gesteinskörnung aus Gesteinskörnern mit einer Korngröße von > 2 mm,
      und
   (B) Bindemittel, bestehend aus oder enthaltend Bitumen sowie optional einen oder mehrere weitere Bindemittelbestandteile ausgewählt aus der Gruppe bestehend aus Wachse, vorzugsweise FT-Wachse, Fettsäureamide, Zeolithe, Haftverbesserer, Naturasphalt und Zellulosefasern,
   wobei das Verhältnis der Gesamtmenge an Bindemittel (B) zur Gesamtmenge an Mineralstoffgemisch (A) (bezogen auf das Gewicht) im Bereich von 1 : 20 bis 1 : 10 liegt,
b) Erhitzen und Vermischen der bereitgestellten Komponenten (A) und (B) auf eine Temperatur im Bereich von 150 bis 200 °C, vorzugsweise bis 180 °C, um eine Asphalt-Vormischung (V1) zu erhalten,
c) Abkühlen der Asphalt-Vormischung (V1) aus Schritt b), vorzugsweise auf eine Temperatur von 40 °C oder weniger, besonders bevorzugt auf eine Temperatur von 20 °C oder weniger,
d) Zerkleinern der abgekühlten Asphalt-Vormischung (V1) aus Schritt c) zu Partikeln mit einem (vorzugsweise mittleren) Durchmesser von jeweils 12 mm oder weniger, vorzugsweise von jeweils 10 mm oder weniger, wobei das Zerkleinern der abgekühlten Asphalt-Vormischung (V1) in einem Schritt oder in mehreren Schritten erfolgt, um eine Vormischung (V2) zu erhalten,
e) Vermischen der Vormischung (V2) aus Schritt d) mit einem oder mehreren Trennmitteln sowie optional einem oder mehreren weiteren Bestandteilen,
f) Absieben von Partikeln mit einem Durchmesser von jeweils 2 mm oder weniger, so dass eine thermoplastische Füllmasse aus Partikeln mit einem durchschnittlichen (vorzugsweise mittleren) Durchmesser im Bereich von > 2 mm bis 12 mm, vorzugsweise im Bereich von > 2 mm bis 10 mm, erhalten wird, vorzugsweise Absieben von Partikeln mit einem Durchmesser von jeweils 3 mm oder weniger.

Bevorzugt enthält oder besteht das Mineralstoffgemisch, jeweils bezogen auf das Gesamtgewicht des Mineralstoffgemischs, aus
(i) 11 bis 15 M.-% Füllstoff aus mineralischen Bestandteilen mit einer Korngröße von ≤ 0,063 mm,
(ii) 57 bis 89 M.-% einer Gesteinskörnung aus Gesteinskörnern mit einer Korngröße im Bereich von > 0,063 mm bis ≤ 2 mm,
   und
(iii) 0 bis 28 M.-% einer Gesteinskörnung aus Gesteinskörnern mit einer Korngröße von > 2 mm.

Das Verhältnis der Gesamtmenge an Bindemittel (B) zur Gesamtmenge an Mineralstoffgemisch (A) liegt bevorzugt im Bereich von 1 : 15,5 bis 1 : 11,5.

Die vorliegende Erfindung betrifft auch - wie einleitend erwähnt - ein Verfahren zur Herstellung einer erfindungsgemäßen thermoplastischen Füllmasse (wie hierin beschrieben, insbesondere wie hierin als bevorzugt beschrieben), bestehend aus oder umfassend folgende Schritte:
a) Bereitstellen von
   (A) einem Mineralstoffgemisch bestehend aus oder enthaltend, jeweils bezogen auf das Gesamtgewicht des Mineralstoffgemischs,
      (i) 0 bis 15 M.-% Füllstoff aus mineralischen Bestandteilen mit einer Korngröße von ≤ 0,063 mm,
      (ii) 57 bis 100 M.-% einer Gesteinskörnung aus Gesteinskörnern mit einer Korngröße im Bereich von > 0,063 mm bis ≤ 2 mm,
         und
      (iii) 0 bis 28 M.-% einer Gesteinskörnung aus Gesteinskörnern mit einer Korngröße von > 2 mm,
      und
   (B) Bindemittel, bestehend aus oder enthaltend Bitumen sowie optional einen oder mehrere weitere Bindemittelbestandteile ausgewählt aus der Gruppe bestehend aus Wachse, vorzugsweise FT-Wachse, Fettsäureamide, Zeolithe, Haftverbesserer, Naturasphalt und Zellulosefasern,
   wobei das Verhältnis der Gesamtmenge an Bindemittel (B) zur Gesamtmenge an Mineralstoffgemisch (A) im Bereich von 1 : 20 bis 1 : 10 liegt,
b) Erhitzen und Vermischen der bereitgestellten Komponenten (A) und (B) auf eine Temperatur im Bereich von 150 bis 200 °C, vorzugsweise bis 180 °C, um eine Asphalt-Vormischung (V1) zu erhalten,
c) Abkühlen der Asphalt-Vormischung (V1) aus Schritt b), vorzugsweise auf eine Temperatur von 40 °C oder weniger, besonders bevorzugt auf eine Temperatur von 20 °C oder weniger,
d) Zerkleinern der abgekühlten Asphalt-Vormischung (V1) aus Schritt c) zu Partikeln mit einem (vorzugsweise mittleren) Durchmesser von jeweils 12 mm oder weniger, vorzugsweise von jeweils 10 mm oder weniger, wobei das Zerkleinern der abgekühlten Asphalt-Vormischung (V1) in einem Schritt oder in mehreren Schritten erfolgt, um eine Vormischung (V2) zu erhalten,
e) Vermischen der Vormischung (V2) aus Schritt d) mit einem oder mehreren Trennmitteln sowie optional einem oder mehreren weiteren Bestandteilen,
f) Absieben von Partikeln mit einem Durchmesser von jeweils 2 mm oder weniger, so dass eine thermoplastische Füllmasse aus Partikeln mit einem durchschnittlichen (vorzugsweise mittleren) Durchmesser im Bereich von > 2 mm bis 12 mm, vorzugsweise im Bereich von > 2 mm bis 10 mm, erhalten wird, vorzugsweise Absieben von Partikeln mit einem Durchmesser von jeweils 3 mm oder weniger.

Für bevorzugte Ausgestaltungen davon gilt das oben im Zusammenhang mit der erfindungsgemäßen thermoplastischen Füllmasse Gesagte entsprechend.

Der Bestandteil (i) des hierin beschriebenen Mineralstoffgemischs (A), sofern vorhanden, umfasst oder besteht vorzugsweise aus einem oder mehreren Bestandteilen aus der Gruppe bestehend aus Kalksteinmehl, Kalkhydrat und Zeolit.

Der Bestandteil (ii) des hierin beschriebenen Mineralstoffgemischs (A) umfasst vorzugsweise, bezogen auf das Gesamtgewicht des Bestandteils (ii), 70 M.-% oder mehr Natursand oder besteht aus Natursand, mit einer Korngröße von ≤ 2 mm. Unter Natursand wird im Zusammenhang mit der vorliegenden Erfindung ein Sand verstanden, der in loser Form in der Natur (im Gegensatz zu Brechsand) vorkommt und nicht durch mechanisches Brechen gewonnen wurde. Natursand ist für den vorgesehenen Verwendungszweck besser geeignet als Brechsand, da die Verfüllung und Bearbeitung einer Schadstelle mit Natursand wegen geringerer innerer Reibung einfacher möglich ist (die Verarbeitung kann per Hand und nicht maschinell erfolgen).

Der Bestandteil (iii) des Mineralstoffgemischs (A), sofern vorhanden, besteht vorzugsweise aus Gesteinskörnern mit einer Korngröße im Bereich von > 2 mm bis ≤ 10 mm.

Bevorzugt besteht Bestandteil (iii) aus Gesteinskörnern mit, bezogen auf die Gesamtmenge an Gesteinskörnern des Bestandteils (iii) bzw. an Gesteinskörnern mit einer Korngröße von > 2 mm, einer durchschnittlichen Korngröße im Bereich von > 2 mm bis ≤ 5 mm.

Im Hinblick auf die hierin beschriebenen Korngrößen bzw. Durchmesser gilt vorzugsweise, dass
- der durchschnittliche (vorzugsweise mittlere) Durchmesser der Partikel der thermoplastischen Füllmasse
   und/oder
- die Korngröße der Bestandteile gemäß (i), (ii) und/oder (iii) des Mineralstoffgemischs (A)
   und/oder
- der (vorzugsweise mittlere) Durchmesser der Partikel der Vormischung (V2)
gemäß TL Gestein-StB 2004/2007 bestimmt wird bzw. werden.

Besonders bevorzugt erfolgt die Bestimmung durch Absiebung in Anlehnung an die DIN EN 933-1.

Das Bitumen des Bindemittels (B) weist vorzugsweise eine Penetration im Bereich von 48 bis 220 (0,1 mm) auf, gemessen nach DIN EN 1426. Bevorzugt ist auch, dass das Bitumen einen Erweichungspunkt im Bereich von 35 bis 54 °C aufweist, gemessen nach DIN EN 1427.

Das Zerkleinern der abgekühlten Asphalt-Vormischung (V1) aus Schritt c) in Schritt d) erfolgt vorzugsweise mittels eines Schlagwalzenbrechers und/oder einer Hammermühle, vorzugsweise dadurch, dass die abgekühlte Asphalt-Vormischung (V1)
- in einem ersten Schritt in einem Schlagwalzenbrecher zu Partikeln mit einem (vorzugsweise mittleren) Durchmesser von jeweils 400 mm oder weniger, vorzugsweise von jeweils 350 mm oder weniger, besonders bevorzugt von jeweils 250 mm oder weniger, zerkleinert wird, und
- in einem anschließenden zweiten Schritt in einer Hammermühle zu Partikeln mit einem (vorzugsweise mittleren) Durchmesser von jeweils 12 mm oder weniger, vorzugsweise von jeweils 10 mm oder weniger, weiter zerkleinert wird.

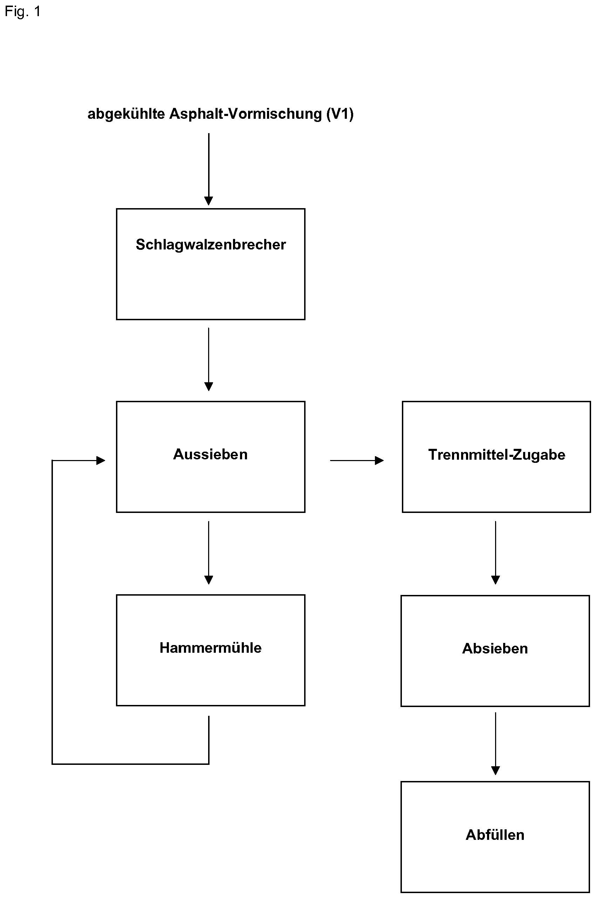

Diesbezüglich wird auch auf die beigefügte Abbildung / Fig. 1 verwiesen, worin eine bevorzugte Abfolge der Schritte d), e) und f) eines erfindungsgemäß besonders bevorzugten Verfahrens zur Herstellung einer erfindungsgemäßen thermoplastischen Füllmasse skizziert ist. Dabei wird die abgekühlte Asphalt-Vormischung (V1) zunächst in einem Schlagwalzenbrecher zu Partikeln mit einem (vorzugsweise mittleren) Durchmesser von jeweils 400 mm oder weniger, vorzugsweise von jeweils 350 mm oder weniger, besonders bevorzugt von jeweils 250 mm oder weniger, zerkleinert. Anschließend werden die Partikel in einem zweiten Schritt in einer Hammermühle zu Partikeln mit einem (vorzugsweise mittleren) Durchmesser von jeweils 12 mm oder weniger, vorzugsweise von jeweils 10 mm oder weniger, weiter zerkleinert. Bevorzugt findet zwischen dem Zerkleinern mittels Schlagwalzenbrecher und dem Zerkleinern mittels Hammermühle ein Aussieben statt, um die Partikel, die bereits einen (vorzugsweise mittleren) Durchmesser von jeweils 12 mm oder weniger bzw. 10 mm oder weniger besitzen, nicht mehr der (weiteren) Zerkleinerung mittels Hammermühle zu unterziehen. Die nach dem Zerkleinern erhaltene Vormischung (V2) aus Schritt d) wird dann mit einem oder mehreren Trennmitteln sowie optional einem oder mehreren weiteren Bestandteilen vermischt (Schritt e)). Anschließend werden dann - falls vorhanden - kleine / besonders feine Partikel abgesiebt (und entfernt), so dass im Ergebnis eine thermoplastische Füllmasse aus Partikeln mit einem durchschnittlichen (vorzugsweise mittleren) Durchmesser im Bereich von > 2 mm bis 12 mm, vorzugsweise im Bereich von > 2 mm bis 10 mm, erhalten wird. D.h., vorzugsweise werden Partikeln mit einem (vorzugsweise mittleren) Durchmesser von jeweils 2 mm oder weniger, vorzugsweise von jeweils 3 mm oder weniger, abgesiebt (und entfernt). Die erhaltene bzw. verbleibende thermoplastische Füllmasse kann dann für den Transport bzw. Vertrieb abgefüllt werden.

Das bzw. ein, mehrere oder sämtliche Trennmittel (wie oben erwähnt) ist bzw. sind vorzugsweise ausgewählt aus der Gruppe bestehend aus mineralischen Mehlen, z. B. Kalk und Kreide, polymeren Haftmitteln und Kieselgur, vorzugsweise aus Kalksteinmehlen, Kieselgur und Acrylat.

Die vorliegende Erfindung betrifft auch eine Vormischung (V2) zur Herstellung einer thermoplastischen Füllmasse, insbesondere
herstellbar oder hergestellt durch ein Verfahren bestehend aus oder umfassend folgende Schritte:
a) Bereitstellen von
   (A) einem Mineralstoffgemisch bestehend aus oder enthaltend, jeweils bezogen auf das Gesamtgewicht des Mineralstoffgemischs,
      (i) 0 bis 15 M.-% Füllstoff aus mineralischen Bestandteilen mit einer Korngröße von ≤ 0,063 mm,
      (ii) 57 bis 100 M.-% einer Gesteinskörnung aus Gesteinskörnern mit einer Korngröße im Bereich von > 0,063 mm bis ≤ 2 mm,
         und
      (iii) 0 bis 28 M.-% einer Gesteinskörnung aus Gesteinskörnern mit einer Korngröße von > 2 mm,
      und
   (B) Bindemittel, bestehend aus oder enthaltend Bitumen sowie optional einen oder mehrere weitere Bindemittelbestandteile ausgewählt aus der Gruppe bestehend aus Wachse, vorzugsweise FT-Wachse, Fettsäureamide, Zeolithe, Haftverbesserer, Naturasphalt und Zellulosefasern,
   wobei das Verhältnis der Gesamtmenge an Bindemittel (B) zur Gesamtmenge an Mineralstoffgemisch (A) im Bereich von 1 : 20 bis 1 : 10 liegt,
b) Erhitzen und Vermischen der bereitgestellten Komponenten (A) und (B) auf eine Temperatur im Bereich von 150 bis 200 °C, vorzugsweise bis 180 °C, um eine Asphalt-Vormischung (V1) zu erhalten,
c) Abkühlen der Asphalt-Vormischung (V1) aus Schritt b), vorzugsweise auf eine Temperatur von 40 °C oder weniger, besonders bevorzugt auf eine Temperatur von 20 °C oder weniger,
d) Zerkleinern der abgekühlten Asphalt-Vormischung (V1) aus Schritt c) zu Partikeln mit einem (vorzugsweise mittleren) Durchmesser von jeweils 12 mm oder weniger, vorzugsweise von jeweils 10 mm oder weniger, wobei das Zerkleinern der abgekühlten Asphalt-Vormischung (V1) in einem Schritt oder in mehreren Schritten erfolgt,
vorzugsweise wobei das Zerkleinern der abgekühlten Asphalt-Vormischung (V1) wie oben als bevorzugt beschrieben erfolgt. Auch im Übrigen gilt für bevorzugte Bestandteile und Schritte das oben Gesagte entsprechend.

Die vorliegende Erfindung betrifft weiterhin die Verwendung einer erfindungsgemäßen thermoplastischen Füllmasse (wie hierin beschrieben)
- zur Beseitigung von Oberflächenschäden in Beton-, Pflaster- oder Asphaltflächen oder zum Schließen von Bohrlöchern oder Fahrbahnaufbrüchen, oder
- zum Einbringen in oder Schließen von Fugen von Hochbauten.

Dementsprechend betrifft die vorliegende Erfindung auch ein Verfahren zum Beseitigen von Oberflächenschäden in Beton-, Pflaster- oder Asphaltflächen oder zum Schließen von Bohrlöchern oder zum Schließen von Fahrbahnaufbrüchen oder zum Schließen von Fugen von Hochbauten, umfassend folgende Schritte:
- Bereitstellen einer erfindungsgemäßen thermoplastischen Füllmasse (wie hierin beschrieben),
- Einbringen bzw. Aufbringen der thermoplastischen Füllmasse in bzw. auf die beschädigte Beton-, Pflaster- oder Asphaltfläche bzw. das zu verschließende Bohrloch bzw. den zu verschließenden Fahrbahnaufbruch bzw. die zu schließende Fuge, wobei die thermoplastische Füllmasse vor dem Ein- bzw. Aufbringen auf eine Temperatur im Bereich von 140 bis 160 °C erhitzt wird.

Vorzugsweise wird die thermoplastische Füllmasse vor dem Ein- bzw. Aufbringen in einer transportablen Asphaltheizvorrichtung zum Aufheizen und Warmhalten von granulatförmigem Asphalt, mit einer Heiz- und Misch-Kammer, die einen Einlass zum Einfüllen von granulatförmigem Asphalt und einen Auslass zum Abgeben von aufgeheiztem Asphalt aufweist, einer Heizeinrichtung zum Aufheizen von in der Kammer befindlichem Asphalt, und einer antreibbaren Förderschnecke zum Mischen und Fördern von in der Kammer befindlichem Asphalt zwischen dem Einlass und dem Auslass, erhitzt, besonders bevorzugt in einer transportablen Asphaltheizvorrichtung wie in der deutschen Gebrauchsmusteranmeldung mit dem Aktenzeichen 20 2014 007324.4 beschrieben, insbesondere wie in den Ansprüchen der Gebrauchsmusteranmeldung beschrieben.

### Nicht erfindungsgemässes Beispiel:

Von einer Zusammensetzung bestehend aus
Komponente (A):
   - 11,0 M.-% Füllstoff aus mineralischen Bestandteilen (hier: 100 % Kalksteinmehl),
   - 64,0 M.-% Natursand (Korngröße ≤ 2 mm) und
   - 25 M.-% Gesteinskörnung (Korngröße > 2 mm bis ≤ 5 mm)
   und
Komponente (B):
   7,5 M.% Bindemittel (97 Gew.-Anteile Bitumen 70/100; 3 Gew.-Anteile Sasobit (FT-Wachs))
(Verhältnis der Gesamtmenge an Bindemittel (B) zur Gesamtmenge an Mineralstoffgemisch (A) (bezogen auf das Gewicht) = 100 : 7,5)
werden die Komponenten (A) und (B) jeweils auf eine Temperatur von etwa 180 °C erhitzt und vermischt. Die resultierende Mischung wird anschließend auf eine Temperatur von etwa 20 °C abgekühlt. Das erhaltene Produkt wird dann wie hierin beschrieben mittels eines Schlagwalzenbrechers und einer Hammermühle zu Partikeln mit einem (vorzugsweise mittleren) Durchmesser von jeweils 12 mm oder weniger gebrochen. Das erhaltene partikuläre Material wird mit einem Trennmittel (hier: Kieselgur) vermischt. Anschließend werden kleine Partikel abgesiebt. Im Ergebnis wird eine thermoplastische Füllmasse aus Partikeln mit einem durchschnittlichen (vorzugsweise mittleren) Durchmesser im Bereich von 2 mm bis 10 mm erhalten.

Die erhaltene thermoplastische Füllmasse wird in mehreren Schichten in ein Schlagloch eingefüllt. Zuvor wird die Füllmasse vorzugsweise in einer transportablen Asphaltheizvorrichtung (wie oben beschrieben) erhitzt. Alternativ kann die Füllmasse auch nach dem Einfüllen (vorzugsweise Schicht für Schicht) mit einem Gasbrenner erhitzt werden. Die einzelnen Schichten werden mit einem Stampfer verdichtet.

## Patentansprüche

1. Thermoplastische Füllmasse, bestehend aus einer Vielzahl an Partikeln mit einem durchschnittlichen Durchmesser im Bereich von > 2 mm bis 12 mm, vorzugsweise im Bereich von > 2 mm bis 10 mm, wobei die thermoplastische Füllmasse hergestellt oder herstellbar ist durch ein Verfahren bestehend aus oder umfassend folgende Schritte:
a) Bereitstellen von
(A) einem Mineralstoffgemisch bestehend aus oder enthaltend, jeweils bezogen auf das Gesamtgewicht des Mineralstoffgemischs,
(i) 0 bis 15 M.-% Füllstoff aus mineralischen Bestandteilen mit einer Korngröße von ≤ 0,063 mm,
(ii) 57 bis 100 M.-% einer Gesteinskörnung aus Gesteinskörnern mit einer Korngröße im Bereich von > 0,063 mm bis ≤ 2 mm,
und
(iii) 0 bis 28 M.-% einer Gesteinskörnung aus Gesteinskörnern mit einer Korngröße von > 2 mm,
und
(B) Bindemittel, bestehend aus oder enthaltend Bitumen sowie optional einen oder mehrere weitere Bindemittelbestandteile ausgewählt aus der Gruppe bestehend aus Wachse, vorzugsweise FT-Wachse, Fettsäureamide, Zeolithe, Haftverbesserer, Naturasphalt und Zellulosefasern,
wobei das Verhältnis der Gesamtmenge an Bindemittel (B) zur Gesamtmenge an Mineralstoffgemisch (A) im Bereich von 1 : 20 bis 1 : 10 liegt,
b) Erhitzen und Vermischen der bereitgestellten Komponenten (A) und (B) auf eine Temperatur im Bereich von 150 bis 200 °C, vorzugsweise bis 180 °C, um eine Asphalt-Vormischung (V1) zu erhalten,
c) Abkühlen der Asphalt-Vormischung (V1) aus Schritt b), vorzugsweise auf eine Temperatur von 40 °C oder weniger, besonders bevorzugt auf eine Temperatur von 20 °C oder weniger,
d) Zerkleinern der abgekühlten Asphalt-Vormischung (V1) aus Schritt c) zu Partikeln mit einem Durchmesser von jeweils 12 mm oder weniger, vorzugsweise von jeweils 10 mm oder weniger, wobei das Zerkleinern der abgekühlten Asphalt-Vormischung (V1) in einem Schritt oder in mehreren Schritten erfolgt, um eine Vormischung (V2) zu erhalten,
e) Vermischen der Vormischung (V2) aus Schritt d) mit einem oder mehreren Trennmitteln sowie optional einem oder mehreren weiteren Bestandteilen,
f) Absieben von Partikeln mit einem Durchmesser von jeweils 2 mm oder weniger, so dass eine thermoplastische Füllmasse aus Partikeln mit einem durchschnittlichen Durchmesser im Bereich von > 2 mm bis 12 mm, vorzugsweise im Bereich von > 2 mm bis 10 mm, erhalten wird, vorzugsweise Absieben von Partikeln mit einem Durchmesser von jeweils 3 mm oder weniger.

2. Verfahren zur Herstellung einer thermoplastischen Füllmasse nach Anspruch 1, bestehend aus oder umfassend folgende Schritte:
a) Bereitstellen von
(A) einem Mineralstoffgemisch bestehend aus oder enthaltend, jeweils bezogen auf das Gesamtgewicht des Mineralstoffgemischs,
(i) 0 bis 15 M.-% Füllstoff aus mineralischen Bestandteilen mit einer Korngröße von ≤ 0,063 mm,
(ii) 57 bis 100 M.-% einer Gesteinskörnung aus Gesteinskörnern mit einer Korngröße im Bereich von > 0,063 mm bis ≤ 2 mm,
und
(iii) 0 bis 28 M.-% einer Gesteinskörnung aus Gesteinskörnern mit einer Korngröße von > 2 mm,
und
(B) Bindemittel, bestehend aus oder enthaltend Bitumen sowie optional einen oder mehrere weitere Bindemittelbestandteile ausgewählt aus der Gruppe bestehend aus Wachse, vorzugsweise FT-Wachse, Fettsäureamide, Zeolithe, Haftverbesserer, Naturasphalt und Zellulosefasern,
wobei das Verhältnis der Gesamtmenge an Bindemittel (B) zur Gesamtmenge an Mineralstoffgemisch (A) im Bereich von 1 : 20 bis 1 : 10 liegt,
b) Erhitzen und Vermischen der bereitgestellten Komponenten (A) und (B) auf eine Temperatur im Bereich von 150 bis 200 °C, vorzugsweise bis 180 °C, um eine Asphalt-Vormischung (V1) zu erhalten,
c) Abkühlen der Asphalt-Vormischung (V1) aus Schritt b), vorzugsweise auf eine Temperatur von 40 °C oder weniger, besonders bevorzugt auf eine Temperatur von 20 °C oder weniger,
d) Zerkleinern der abgekühlten Asphalt-Vormischung (V1) aus Schritt c) zu Partikeln mit einem Durchmesser von jeweils 12 mm oder weniger, vorzugsweise von jeweils 10 mm oder weniger, wobei das Zerkleinern der abgekühlten Asphalt-Vormischung (V1) in einem Schritt oder in mehreren Schritten erfolgt, um eine Vormischung (V2) zu erhalten,
e) Vermischen der Vormischung (V2) aus Schritt d) mit einem oder mehreren Trennmitteln sowie optional einem oder mehreren weiteren Bestandteilen,
f) Absieben von Partikeln mit einem Durchmesser von jeweils 2 mm oder weniger, so dass eine thermoplastische Füllmasse aus Partikeln mit einem durchschnittlichen Durchmesser im Bereich von > 2 mm bis 12 mm, vorzugsweise im Bereich von > 2 mm bis 10 mm, erhalten wird, vorzugsweise Absieben von Partikeln mit einem Durchmesser von jeweils 3 mm oder weniger.

3. Thermoplastische Füllmasse nach Anspruch 1 oder Verfahren zur Herstellung einer solchen nach Anspruch 2, wobei der Bestandteil (i) des Mineralstoffgemischs (A), sofern vorhanden, einen oder mehrere Bestandteile aus der Gruppe bestehend aus Kalksteinmehl, Kalkhydrat und Zeolith umfasst oder daraus besteht.

4. Thermoplastische Füllmasse oder Verfahren zur Herstellung einer solchen nach einem der vorangehenden Ansprüche, wobei der Bestandteil (ii) des Mineralstoffgemischs (A) bezogen auf das Gesamtgewicht des Bestandteils (ii) 70 M.-% oder mehr Natursand umfasst oder aus Natursand besteht.

5. Thermoplastische Füllmasse oder Verfahren zur Herstellung einer solchen nach einem der vorangehenden Ansprüche, wobei der Bestandteil (iii) des Mineralstoffgemischs (A), sofern vorhanden, aus Gesteinskörnern mit einer durchschnittlichen Korngröße im Bereich von > 2 mm bis ≤ 5 mm besteht.

6. Thermoplastische Füllmasse oder Verfahren zur Herstellung einer solchen nach einem der vorangehenden Ansprüche, wobei
- der durchschnittliche Durchmesser der Partikel der thermoplastischen Füllmasse
und/oder
- die Korngröße der Bestandteile gemäß (i), (ii) und/oder (iii) des Mineralstoffgemischs (A)
und/oder
- der Durchmesser der Partikel der Vormischung (V2) gemäß TL Gestein-StB 2004/2007 bestimmt wird bzw. werden, vorzugsweise gemäß DIN EN-933-1.

7. Thermoplastische Füllmasse oder Verfahren zur Herstellung einer solchen nach einem der vorangehenden Ansprüche, wobei das Bitumen eine Penetration im Bereich von 48 bis 220 (0,1 mm) gemessen nach DIN EN 1426 und/oder einen Erweichungspunkt im Bereich von 35 bis 54 °C gemessen nach DIN EN 1427 aufweist.

8. Thermoplastische Füllmasse oder Verfahren zur Herstellung einer solchen nach einem der vorangehenden Ansprüche, wobei in Schritt d) das Zerkleinern der abgekühlten Asphalt-Vormischung (V1) aus Schritt c) mittels eines Schlagwalzenbrechers und/oder einer Hammermühle erfolgt, vorzugsweise dadurch, dass die abgekühlte Asphalt-Vormischung (V1)
- in einem ersten Schritt in einem Schlagwalzenbrecher zu Partikeln mit einem Durchmesser von jeweils 400 mm oder weniger, vorzugsweise von jeweils 350 mm oder weniger, besonders bevorzugt von jeweils 250 mm oder weniger, zerkleinert wird, und
- in einem anschließenden zweiten Schritt in einer Hammermühle zu Partikeln mit einem Durchmesser von jeweils 12 mm oder weniger, vorzugsweise von jeweils 10 mm oder weniger, weiter zerkleinert wird.

9. Thermoplastische Füllmasse oder Verfahren zur Herstellung einer solchen nach einem der vorangehenden Ansprüche, wobei das bzw. ein, mehrere oder sämtliche Trennmittel ausgewählt ist bzw. sind aus der Gruppe bestehend aus mineralischen Mehlen, z. B. Kalk und Kreide, polymeren Haftmitteln und Kieselgur, vorzugsweise aus Kalksteinmehlen, Kieselgur und Acrylat.

10. Verwendung einer thermoplastischen Füllmasse nach einem der Ansprüche 1 bis 9 zur Beseitigung von Oberflächenschäden in Beton-, Pflaster- oder Asphaltflächen oder zum Schließen von Bohrlöchern oder Fahrbahnaufbrüchen.

11. Verwendung einer thermoplastischen Füllmasse nach einem der Ansprüche 1 bis 9 zum Einbringen in oder Schließen von Fugen von Hochbauten.

12. Verfahren
zum Beseitigen von Oberflächenschäden in Beton-, Pflaster- oder Asphaltflächen oder
zum Schließen von Bohrlöchern oder
zum Schließen von Fahrbahnaufbrüchen oder
zum Schließen von Fugen von Hochbauten,
umfassend folgende Schritte:
- Bereitstellen einer thermoplastischen Füllmasse nach einem der Ansprüche 1 bis 9,
- Einbringen bzw. Aufbringen der thermoplastischen Füllmasse in bzw. auf die beschädigte Beton-, Pflaster- oder Asphaltfläche bzw. das zu verschließende Bohrloch bzw. den zu verschließenden Fahrbahnaufbruch bzw. die zu schließende Fuge,
wobei die thermoplastische Füllmasse vor dem Ein- bzw. Aufbringen auf eine Temperatur im Bereich von 140 bis 160 °C erhitzt wird.

13. Verfahren nach Anspruch 12, wobei die thermoplastische Füllmasse vor dem Ein- bzw. Aufbringen in einer transportablen Asphaltheizvorrichtung zum Aufheizen und Warmhalten von granulatförmigem Asphalt, mit einer Heiz- und Misch-Kammer, die einen Einlass zum Einfüllen von granulatförmigem Asphalt und einen Auslass zum Abgeben von aufgeheiztem Asphalt aufweist, einer Heizeinrichtung zum Aufheizen von in der Kammer befindlichem Asphalt, und einer antreibbaren Förderschnecke zum Mischen und Fördern von in der Kammer befindlichem Asphalt zwischen dem Einlass und dem Auslass, erhitzt wird.

## Claims

1. Thermoplastic filling compound, consisting of a plurality of particles with an average diameter in the range of from > 2 mm to 12 mm, preferably in the range of from > 2 mm to 10 mm, wherein the thermoplastic filling compound is prepared or preparable by a method consisting of or comprising the following steps:
a) providing
(A) a mineral aggregate consisting of or comprising, each related to the total weight of the mineral aggregate,
(i) 0 to 15 wt.-% of a filler, made of mineral components with a particle size of ≤ 0.063 mm,
(ii) 57 to 100 wt.-% of an aggregate of rock particles, made of rock particles with a particle size in the range of from > 0.063 mm to ≤ 2 mm,
and
(iii) 0 to 28 wt.-% of an aggregate of rock particles, made of rock particles with a particle size of > 2 mm,
and
(B) binding agent, consisting of or comprising bitumen as well as optionally one or more further binding agent components selected from the group consisting of waxes, preferably FT-waxes, fatty acid amides, zeolites, bonding enhancers, natural asphalt and cellulose fibres,
wherein the ratio of the total amount of binding agent (B) to the total amount of mineral aggregate (A) is in the range of from 1 : 20 to 1 : 10,
b) heating and mixing the provided components (A) and (B) to a temperature in the range of from 150 to 200 °C, preferably to 180 °C, to obtain an asphalt pre-mixture (V1),
c) cooling down the asphalt pre-mixture (V1) of step b), preferably to a temperature of 40 °C or less, particularly preferably to a temperature of 20 °C or less,
d) crushing the cooled down asphalt pre-mixture (V1) of step c) into particles with a diameter of each 12 mm or less, preferably of each 10 mm or less, wherein the crushing of the cooled down asphalt pre-mixture (V1) is achieved in one step or in several steps to obtain a pre-mixture (V2),
e) mixing the pre-mixture (V2) of step d) with one or more separating agent(s) as well as optionally with one or more further components,
f) sieving the particles with a diameter of each 2 mm or less, so that a thermoplastic filling compound, made of particles with an average diameter in the range of from > 2mm to 12 mm, preferably in the range of from > 2 mm to 10 mm, is obtained, preferably sieving the particles with a diameter of each 3 mm or less.

2. Method for producing a thermoplastic filling compound according to claim 1, consisting of or comprising the following steps:
a) providing
(A) a mineral aggregate consisting of or comprising, each related to the total weight of the mineral aggregate,
(i) 0 to 15 wt.-% of a filler, made of mineral components with a particle size of ≤ 0.063 mm,
(ii) 57 to 100 wt.-% of an aggregate of rock particles, made of rock particles with a particle size in the range of from > 0.063 mm to ≤ 2 mm,
and
(iii) 0 to 28 wt.-% of an aggregate of rock particles, made of rock particles with a particle size of > 2 mm,
and
(B) binding agent, consisting of or comprising bitumen as well as optionally one or more further binding agent components selected from the group consisting of waxes, preferably FT-waxes, fatty acid amides, zeolites, bonding enhancers, natural asphalt and cellulose fibres,
wherein the ratio of the total amount of binding agent (B) to the total amount of mineral aggregate (A) is in the range of from 1 : 20 to 1 : 10,
b) heating and mixing the provided components (A) and (B) to a temperature in the range of from 150 to 200 °C, preferably to 180 °C, to obtain an asphalt pre-mixture (V1),
c) cooling down the asphalt pre-mixture (V1) of step b), preferably to a temperature of 40 °C or less, particularly preferably to a temperature of 20 °C or less,
d) crushing the cooled down asphalt pre-mixture (V1) of step c) into particles with a diameter of each 12 mm or less, preferably of each 10 mm or less, wherein the crushing of the cooled down asphalt pre-mixture (V1) is achieved in one step or in several steps to obtain a pre-mixture (V2),
e) mixing the pre-mixture (V2) of step d) with one or more separating agent(s) as well as optionally with one or more further components,
f) sieving the particles with a diameter of each 2 mm or less, so that a thermoplastic filling compound, made of particles with an average diameter in the range of from > 2mm to 12 mm, preferably in the range of from > 2 mm to 10 mm, is obtained, preferably sieving the particles with a diameter of each 3 mm or less.

3. Thermoplastic filling compound according to claim 1 or method for producing such according to claim 2, wherein the component (i) of the mineral aggregate (A), if present, comprises or consist of one or more components of the group consisting of limestone meal, lime hydrate and zeolite.

4. Thermoplastic filling compound or method for producing such according to one of the preceding claims, wherein the component (ii) of the mineral aggregate (A), related to the total weight of component (ii), comprises 70 wt.-% or more natural sand or consists thereof.

5. Thermoplastic filling compound or method for producing such according to one of the preceding claims, wherein the component (iii) of the mineral aggregate (A), if present, consists of rock particles with an average particle size in the range of from > 2 mm to ≤ 5 mm.

6. Thermoplastic filling compound or method for producing such according to one of the preceding claims, wherein
- the average diameter of the particles of the thermoplastic filling compound and/or
- the particle size of the components according to (i), (ii) and/or (iii) of the mineral aggregate (A)
and/or
- the diameter of the particles of the pre-mixture (V2)
is / are determined according to TL Gestein-StB 2004/2007, preferably according to DIN EN-933-1.

7. Thermoplastic filling compound or method for producing such according to one of the preceding claims, wherein the bitumen has a penetration in the range of from 48 to 220 (0.1 mm), measured according to DIN EN 1426, and/or a softening point in the range of from 35 to 54 °C, measured according to DIN EN 1427.

8. Thermoplastic filling compound or method for producing such according to one of the preceding claims, wherein in step d) the crushing of the cooled down asphalt pre-mixture (V1) of step c) is performed with an impact roll crusher and/or a hammer mill, preferably by
- crushing the cooled down asphalt pre-mixture (V1) with an impact roll crusher to particles with a diameter of each 400 mm or less, preferably of each 350 mm or less, particularly preferably of each 250 mm or less, in a first step and
- crushing the cooled down asphalt pre-mixture (V1) with a hammer mill to particles with a diameter of each 12 mm or less, preferably of each 10 mm or less, in a second step.

9. Thermoplastic filling compound or method for producing such according to one of the preceding claims, wherein the or a, several or all separating agent(s) is / are selected from the group consisting of mineral meals, e.g. lime and chalk, polymeric adhesive agents and diatomaceous earth, preferably of limestone meals, diatomaceous earth and acrylate.

10. Use of a thermoplastic filling compound according to one of the claims 1 to 9 for removing surface damages in concrete, cobbles or asphalt surfaces or for closing boreholes or road cracks.

11. Use of a thermoplastic filling compound according to one of the claims 1 to 9 for the introduction into or the closing of joints of building constructions.

12. Method
for removing surface damages in concrete, cobbles or asphalt surfaces
or
for closing boreholes or
for closing road cracks or
for closing joints of building constructions,
comprising the following steps:
- providing a thermoplastic filling compound according to one of the claims 1 to 9,
- introducing or, respectively, applying the thermoplastic filling compound in or, respectively, on the damaged concrete, cobbles or asphalt surface or, respectively, the borehole to be closed or, respectively, the road crack to be closed or, respectively, the joint to be closed,
wherein the thermoplastic filling component is heated to a temperature in the range of from 140 to 160 °C before introduction or, respectively, application.

13. Method according to claim 12, wherein before introduction or, respectively, application, the thermoplastic filling compound is heated in a transportable asphalt heating device for heating and keeping warm granular asphalt, with a heating and mixing chamber, which has an inlet for filling in granular asphalt and an outlet for emitting heated asphalt, a heating device for heating asphalt present in the chamber and a propellable screw conveyor for mixing and conveying the asphalt in the chamber between the inlet and outlet.

## Revendications

1. Masse de remplissage thermoplastique, composé d'une multitude de particules avec un diamètre moyen situé dans la plage de >2 mm à 12 mm, de préférence dans la plage de >2 mm à 10 mm, dans laquelle la masse de remplissage thermoplastique est ou peut être fabriquée par un procédé composé ou comprenant les étapes suivantes :
a) fournir
(A) un mélange de matières minérales composé de, ou contenant, par rapport respectivement au poids total du mélange de matières minérales,
(i) 0 à 15 pour cent de masse de matière de remplissage en composants minéraux avec une dimension de grain de ≤ 0,063 mm,
(ii) 57 à 100 pour cent de masse d'un granulat composé d'un granulat de roche avec une dimension de grain située dans la plage de > 0,063 mm à ≤ 2 mm,
et
(iii) 0 à 28 pour cent de masse d'un granulat composé d'un granulat de roche avec une dimension de grain > 2 mm,
et
(B) un liant composé, ou contenant, de la bitume ainsi que, facultativement, un ou plusieurs composants de liant supplémentaire(s) sélectionné(s) dans le groupe composé de cires, de préférence de cires FT, d'amides d'acide gras, de zéolithes, de copulants, d'asphalte naturel et de fibres cellulosiques,
sachant que le rapport de la quantité totale de liant (B) à la quantité totale de mélange de matières minérales (A) se situe dans la plage de 1:20 à 1:10,
b) chauffer mélanger les composants (A) et (B) fournis à une température dans la plage de 150 à 200 °C, de préférence jusqu'à 180 °C, afin d'obtenir un prémélange d'asphalte (V1),
c) refroidir le prémélange d'asphalte (V1) de l'étape b), de préférence à une température de 40 °C ou moins, de manière particulièrement préférée, à une température de 20 °C ou moins,
d) concasser le prémélange d'asphalte (V1) refroidi de l'étape c) en particules avec un diamètre de respectivement 12 mm ou moins, de préférence, de respectivement 10 mm ou moins, sachant que le concassage du prémélange d'asphalte (V1) refroidi s'effectue en une étape ou en plusieurs étapes, pour obtenir un prémélange (V2),
e) mélanger le prémélange (V2) de l'étape d) avec un ou plusieurs agents anti-adhérents ainsi que, facultativement, avec un ou plusieurs composants supplémentaires,
f) criblage des particules avec un diamètre de respectivement 2 mm ou moins, de manière à obtenir une masse de remplissage thermoplastique composée de particules avec un diamètre moyen dans la plage de > 2 mm à 12 mm, de préférence, dans la plage de > 2 mm à 10 mm, de préférence, criblage de particules avec un diamètre de respectivement 3 mm ou moins.

2. Procédé pour fabriquer une masse de remplissage thermoplastique selon la revendication 1, composé ou comprenant les étapes suivantes :
a) fournir
(A) un mélange de matières minérales composé de, ou contenant, par rapport respectivement au poids total du mélange de matières minérales,
(i) 0 à 15 pour cent de masse de matière de remplissage en composants minéraux avec une dimension de grain de ≤ 0,063 mm,
(ii) 57 à 100 pour cent de masse d'un granulat composé d'un granulat de roche avec une dimension de grain située dans la plage de > 0,063 mm à ≤ 2 mm,
et
(iii) 0 à 28 pour cent de masse d'un granulat composé d'un granulat de roche avec une dimension de grain > 2 mm,
et
(B) un liant composé, ou contenant, de la bitume ainsi que, facultativement, un ou plusieurs composants de liant supplémentaire(s) sélectionné(s) dans le groupe composé de cires, de préférence de cires FT, d'amides d'acide gras, de zéolithes, de copulants, d'asphalte naturel et de fibres cellulosiques,
sachant que le rapport de la quantité totale de liant (B) à la quantité totale de mélange de matières minérales (A) se situe dans la plage de 1:20 à 1:10,
b) chauffer mélanger les composants (A) et (B) fournis à une température dans la plage de 150 à 200 °C, de préférence jusqu'à 180 °C, afin d'obtenir un prémélange d'asphalte (V1),
c) refroidir le prémélange d'asphalte (V1) de l'étape b), de préférence à une température de 40 °C ou moins, de manière particulièrement préférée, à une température de 20 °C ou moins,
d) concasser le prémélange d'asphalte (V1) refroidi de l'étape c) en particules avec un diamètre de respectivement 12 mm ou moins, de préférence, de respectivement 10 mm ou moins, sachant que le concassage du prémélange d'asphalte (V1) refroidi s'effectue en une étape ou en plusieurs étapes, pour obtenir un prémélange (V2),
e) mélanger le prémélange (V2) de l'étape d) avec un ou plusieurs agents anti-adhérents ainsi que, facultativement, avec un ou plusieurs composants supplémentaires,
f) criblage des particules avec un diamètre de respectivement 2 mm ou moins, de manière à obtenir une masse de remplissage thermoplastique composée de particules avec un diamètre moyen dans la plage de > 2 mm à 12 mm, de préférence, dans la plage de > 2 mm à 10 mm, de préférence, criblage de particules avec un diamètre de respectivement 3 mm ou moins.

3. Masse de remplissage thermoplastique selon la revendication 1 ou procédé pour fabriquer une telle masse de remplissage selon la revendication 2, dans laquelle/lequel le composant (i) du mélange de matières minérales (A), s'il existe, contient ou se compose d'un ou de plusieurs composants issus du groupe composé de calcaire pulvérisé, chaux hydratée et zéolithe.

4. Masse de remplissage thermoplastique ou procédé pour fabriquer une telle masse de remplissage selon l'une des revendications précédentes, dans laquelle/lequel le composant (ii) du mélange de matières minérales (A), par rapport au poids total du composant (ii), contient 70 pour cent de masse ou plus de sable naturel ou se compose de sable naturel.

5. Masse de remplissage thermoplastique ou procédé pour fabriquer une telle masse de remplissage selon l'une des revendications précédentes, dans laquelle/lequel le composant (iii) du mélange de matières minérales (A), s'il existe, se compose d'un granulat de roche avec une dimension de grain moyenne située dans la plage de > 2 mm à ≤ 5 mm.

6. Masse de remplissage thermoplastique ou procédé pour fabriquer une telle masse de remplissage selon l'une des revendications précédentes, dans laquelle/lequel
- le diamètre moyen des particules de la masse de remplissage thermoplastique
et/ou
- la dimension de grain des composants selon (i), (ii) et/ou (iii) du mélange de matières minérales (A)
et/ou
- le diamètre des particules du prémélange (V2)
est/sont déterminés conformément à TL Gestein-StB 2004/2007, de préférence, conformément à DIN EN-933-1.

7. Masse de remplissage thermoplastique ou procédé pour fabriquer une telle masse de remplissage selon l'une des revendications précédentes, dans laquelle/lequel le bitume présente pénétration située dans la plage de 48 à 220 (0,1 mm), mesurée selon DIN EN 1426 et/ou un point de ramollissement situé dans la plage de 35 à 54 °C, mesuré selon DIN EN 1427.

8. Masse de remplissage thermoplastique ou procédé pour fabriquer une telle masse de remplissage selon l'une des revendications précédentes, dans laquelle/lequel, à l'étape d), le concassage du prémélange d'asphalte (V1) refroidi de l'étape c) s'effectue à l'aide d'un concasseur à cylindres à percussion et/ou d'un concasseur à marteaux, de préférence, en ce sens que le prémélange d'asphalte (V1) refroidi,
- dans une première étape, est concassé dans un concasseur à cylindres à percussion en particules avec un diamètre de respectivement 400 mm ou moins, de préférence, de respectivement 350 mm ou moins, de manière particulièrement préférée, de respectivement 250 mm ou moins, et,
- dans une seconde étape subséquente, concassé davantage dans un concasseur à marteaux en particules avec un diamètre de respectivement 12 mm ou moins, de préférence, de respectivement 10 mm ou moins.

9. Masse de remplissage thermoplastique ou procédé pour fabriquer une telle masse de remplissage selon l'une des revendications précédentes, dans laquelle/lequel le ou un, plusieurs ou tous les agents antiagglomérants est ou sont sélectionné(s)s dans le groupe composés de farines minérales, par exemple calcaire et craie, agents d'adhésivité polymères et kieselgur, de préférence en calcaire pulvérisé, kieselgur et acrylate.

10. Utilisation d'une masse de remplissage thermoplastique selon l'une des revendications 1 à 9 pour éliminer des dommages de surface sur des surfaces en béton, en pavés ou en asphalte ou pour boucher des trous de perçage ou des défonçages de chaussées.

11. Utilisation d'une masse de remplissage thermoplastique selon l'une des revendications 1 à 9 pour l'injection dans des joints de constructions en hauteur ou le bouchage des mêmes.

12. Procédé
pour éliminer des dommages de surface sur des surfaces en béton, en pavés ou en asphalte
ou
pour boucher des trous de perçage ou
pour boucher des défonçages de chaussées ou
pour boucher des joints de constructions en hauteur,
comprenant les étapes suivantes :
- fournir une masse de remplissage thermoplastique selon l'une des revendications 1 à 9,
- injecter ou appliquer la masse de remplissage thermoplastique dans ou sur la surface en béton, en pavés ou en asphalte endommagée ou le trou de perçage, le défonçage de chaussées ou le joint à boucher,
sachant que la masse de remplissage thermoplastique est chauffée à une température dans la plage de 140 à 160 °C avant l'injection ou l'application.

13. Procédé selon la revendication 12, dans lequel la masse de remplissage thermoplastique, avant l'injection ou l'application, est chauffée dans un dispositif de chauffage d'asphalte transportable pour chauffer et maintenir à chaud l'asphalte granulaire, comportant une chambre de chauffage et de mélange possédant une entrée pour remplir l'asphalte granulaire et une sortie pour déverser l'asphalte chauffé, un dispositif de chauffage pour chauffer l'asphalte contenu dans la chambre, et une vis de transport pouvant être entrainée pour mélanger et transporter l'asphalte contenu dans la chambre entre l'entrée et la sortie.
